# EUROPEAN PATENT APPLICATION

(11) **EP 2 835 530 A1**
(43) Date of publication of application: **11.02.2015**
(21) Application number: 14177021.4
(22) Date of filing: 15.07.2014
(51) Int. Cl.: F03D 9/00, F03D 5/04

(54) **Mobile plant for producing electrical energy**

(30) Priority: 15.07.2013 IT MI20130263 U
(71) Applicant: Sunjade Investment Limited, London SW6 IRP (GB)
(72) Inventor: Allegretti, Andrea Riccardo, 27100 PAVIA (PV) (IT)
(74) Representative: Ottazzo, Marco Francesco Agostino

(57) **Abstract**

Herein described is a system for the production of electrical energy comprising a support and guide infrastructure (10) configured to moveably support one or more support units (12) driven by a driving unit. On each support unit (12) there are mounted one or more wind turbines (16) each provided with at least one rotor rotatably coupled to a basement (18), in turn fixed to the relative support unit (12), so that, exploiting the speed imparted to the support units (12) by the driving unit in motion, it generates an air current which, rotating each rotor, produces kinetic energy convertible into electrical energy.

## Description

The present invention generally refers to a system for the production of electrical energy and, more in particular, to a mobile system capable of producing electrical energy of the wind type.

As known, wind energy is obtained from wind or, in other words, the product of conversion of the kinetic energy, obtained from the air currents, in other forms of energy (mechanical or electrical). Wind energy is typically converted into electrical energy through one or wind generators.

A wind generator, otherwise referred to as aerogenerator or wind turbine, generally consists of a support structure on whose top part there is located a casing containing an electrical generator actuated by a blade rotor. The blade rotor of the conventional aerogenerators mainly has a horizontal rotation axis. An aerogenerator is capable of supplying a very variable electrical power as a function of the amount of wind, the place in which it is positioned and time.

Regardless of the type and size, the conventional aerogenerators are of the fixed type. In other words, the support structure of the blade rotor is configured to be fixed on the ground, or on a special static basement which can also be of the submarine type.

When evaluating of the place where a stationary aerogenerator is to be installed it is thus necessary to consider some important factors, including:
- interference with the other structures (buildings or other wind turbines);
- sound pollution;
- simplicity of installation;
- length of the electrical path (cable trenching and energy dispersion costs);
- safety and physical soundness tests;
- any ecological or historical archaeological restrictions.

In addition, the almost total impossibility of guaranteeing constant speed of the wind implies that the fixed aerogenerators can not operate with continuity at full regime, thus they cannot continuously supply the maximum electrical power for which they were designed.

Thus, a general object of the present invention is to provide a system for the production of electrical energy, in particular a mobile system capable of producing electrical energy of wind type, that is capable of overcoming the aforementioned drawbacks of the prior art in an extremely simple, inexpensive and particularly functional manner.

In detail, an object of the present invention is to provide a mobile system for the production of electrical energy that is capable of supplying a substantially constant electrical power exploiting the kinetic energy obtained from the air currents.

Another object of the invention is to provide a mobile system for the production of electrical energy that can be easily installed outdoors without requiring meeting particular environmental restrictions.

A further object of the invention is to provide a mobile system for the production of electrical energy that can be equally easily disassembled and reinstalled in other areas according to the needs.

These objects according to the present invention are obtained by providing a system for the production of electrical energy, in particular a mobile system capable of producing electrical energy of the wind type, as outlined in claim 1.

Further characteristics of the invention are outlined by the dependent claims, which are an integral part of the present invention description.

The characteristics and advantages of a mobile system for the production of electrical energy according to the present invention shall be more apparent from the following exemplifying and nonlimiting description with reference to the attached schematic drawings wherein:

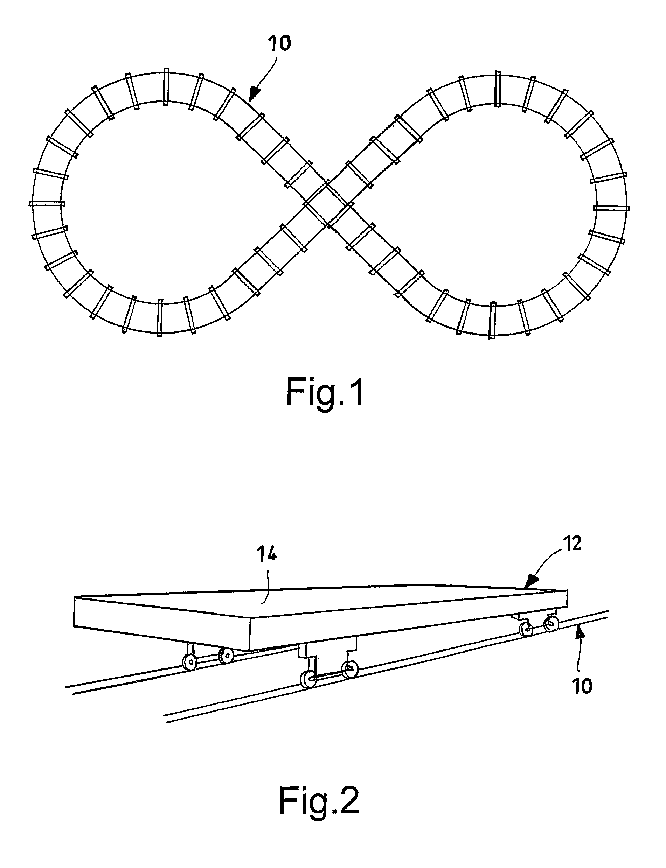

figure 1 is a top plan view of a first component of the mobile system for the production of electrical energy according to the present invention;
figure 2 is a perspective view of a second component of the mobile system for the production of electrical energy according to the present invention;
figure 3 is a perspective view of the component of figure 2, on which there is applied a wind turbine in closed configuration;
figure 4 is a perspective view of an embodiment of a wind turbine applicable on the component of figure 2; and
figure 5 is a top plan view of an embodiment of wind turbines applicable on the component of figure 2. With reference to the figures, there is shown a preferred embodiment of the mobile system for the production of electrical energy according to the present invention. First and foremost, the system comprises a support and guide infrastructure 10, which can be both positionable on the ground, in a removable or irremovable manner, and on the water, in the latter case it being typically constituted by a boat which serves as a driving unit.

For example, the infrastructure 10 may be constituted by a track of the railway type to be installed in farmlands or any other suitable place, flat or less. The track may form a path of any length and shape, such as for example circular, oval or polygonal of open or closed type depending on the type of ground on which the track is installed. However, it cannot be excluded that the infrastructure 10 can be different from a track and be constituted by any other type of path, such as for example a single track, a road for wheel transport, etc.

The infrastructure 10 is configured to moveably support one or more support units 12 equipped with one or more wind turbines 16. According to the embodiment shown in the figures, the support units 12 are constituted by one or more carriages provided with wheels, driven by a driving unit (not shown) also supported by the infrastructure 10. The driving unit is provided with a driving means which can be of the electrical type or, more preferably, of the internal combustion type.

Each carriage 12 is preferably provided with a platform framework 14. Between the platform framework 14 and the wheels there may be conveniently interposed damping means (leaf springs, helical springs, etc.).

On each carriage 12, in particular on the relative platform framework 14, there are mounted one or more wind turbines 16. Each wind turbine 16 is provided with at least one rotor rotatably coupled to a basement 18, in turn fixed to the relative carriage 12. Thus, exploiting the speed imparted to the carriages 12 by the moving driving unit, allows generating an air current which, rotating each rotor, produces kinetic energy convertible into electrical energy.

Each carriage 12 is actually provided with an integrated electrical system capable of converting the kinetic energy produced by the rotation of each rotor into electrical energy. Such electrical energy may be stored in special accumulators, such as for example buffer batteries, or they can be directly introduced into the electric grid through special cables operatively connected to the infrastructure 10. For example, the electrical system of each carriage 12 may comprise an alternator, a load transformer, an inverter and one or more operating batteries.

Alternatively to the carriages, the support units 12 could be constituted by closed casings or container, within which there are housed one or more wind turbines 16. Such closed casings or container are configured so as to be transported and/or driven by any driving unit or transport means suitable to impart to the closed casings or container a suitable speed for the operation of the wind turbines 16. Additionally, such closed casings or container could be provided with one or more lateral and/or top openings, preferably orientable and compatible with the number of the wind turbines 16 present within the closed casing or container, so as to convey the airflow towards the wind turbines 16.

Each rotor has preferably a vertical rotation axis and it comprises a plurality of blades 20 also with substantially vertical development. However, it cannot be excluded that there can also be used other types of suitably dimensioned wind turbines, for example of the type with horizontal rotation axis.

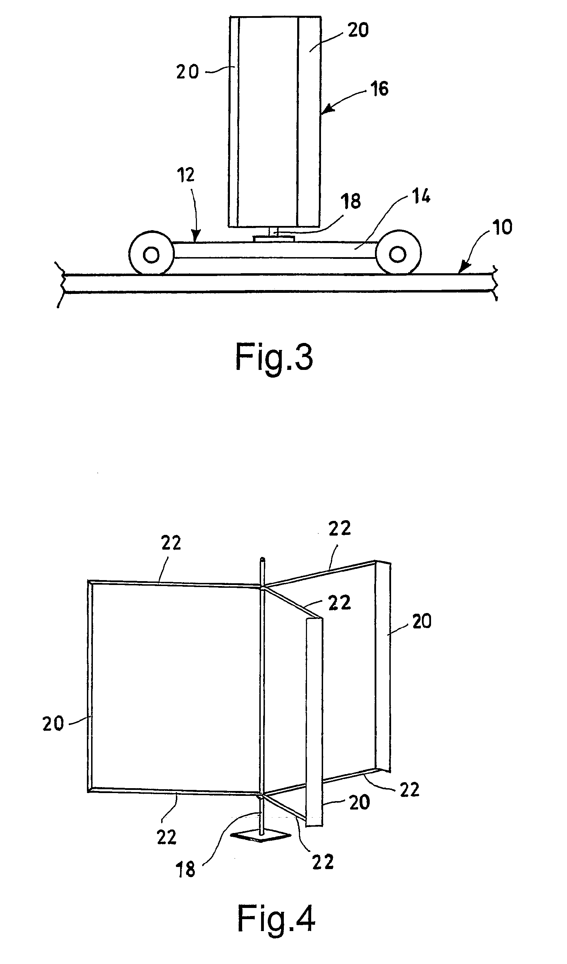

The blades 20 are preferably positioned at a predefined distance from the rotation shaft thereof through the interposition of relative substantially horizontal arms 22. According to a preferred embodiment, the arms 22 are foldable so as to compact the blades 20 around the rotation shaft thereof in a closed configuration of the wind turbine 16, shown by way of example in figure 3.

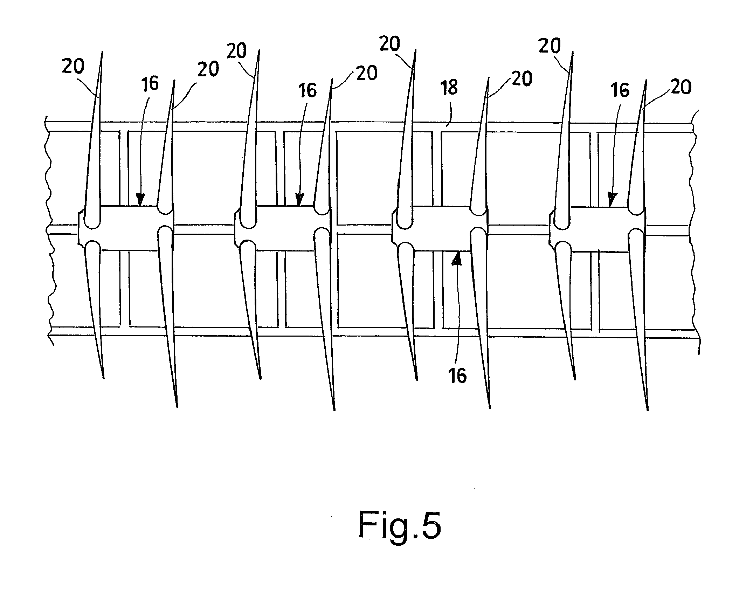

With reference to figure 5, there is shown an embodiment of the wind turbines 16 in which there is present a plurality of wind turbines 16 arranged in series. Each of such wind turbines 16 is provided with a horizontal rotation axis, as well as a double rotor with a plurality of blades 20 with substantially radial development.

The driving unit is preferably equipped with a driving means of the internal combustion type, which can be supplied with various types of conventional fuels such as petrol, gas, methane (if of the Otto cycle type) or diesel, naphtha, fuel oils (if of the Diesel cycle type). The driving unit it is thus preferably configured to move at a predefined constant speed, typically in the order of 50 km/h.

In the preferred embodiment of the mobile system for the production of electrical energy according to the present invention, the driving unit is configured for driving a number of carriages 12 comprised between ten and twenty units. Each wind turbine 16 is of the type capable of supplying an electrical power comprised between 2 kW and 10 kW, with an optimal average of 5 kW.

The length of the support and guide infrastructure 10 is comprised between a minimum of 150 metres at a maximum of a few km. The optimal speed of the carriages 12, driven by the respective driving unit, was calculated in a range comprised between about 30 km/h and about 60 km/h. Operating at such speed allows obtaining an air current which moves at about 8 m/s and beyond. This air current, considering the characteristics of a particular type of wind turbine 16, allows the production of electrical energy with values similar to those indicated in the table below.

| Air current speed (m/s) | Electrical power (W) |
|---|---|
| 2.5 | 250 |
| 3.0 | 680 |
| 3.5 | 1320 |
| 4.0 | 2290 |
| 4.5 | 2820 |
| 5.0 | 3350 |
| 5.5 | 3880 |
| 6.0 | 4300 |
| 6.5 | 4700 |
| 7.0 | 5000 |

It has thus been observed that the mobile system for the production of electrical energy according to the present invention attains the objects outlined above.

The mobile system for the production of electrical energy thus conceived is susceptible to numerous modifications and variants, all falling within the same incentive concept; in addition all the details can be replaced technically equivalent elements. Practically, the materials used, as well as the shapes and dimensions, may vary according to the technical requirements.

The scope of protection of the invention is thus defined by the attached claims.

## Claims

1. System for the production of electrical energy comprising a support and guide infrastructure (10) configured to moveably support one or more support units (12) driven by a driving unit, **characterised in that** on each support unit (12) there are mounted one or more wind turbines (16) each provided with at least one rotor rotatably coupled to a basement (18), in turn fixed to the relative support unit (12), so that, exploiting the speed imparted to the support units (12) by the driving unit in motion, it generates an air current which, rotating each rotor, produces kinetic energy convertible into electrical energy.

2. System for the production of electrical energy according to claim 1, **characterised in that** said one or more support units (12) are constituted by one or more corresponding carriages provided with wheels, driven by a driving unit supported by the infrastructure (10) and provided with a driving means.

3. System for the production of electrical energy according to claim 2, **characterised in that** each carriage (12) is provided with an integrated electrical system capable of converting the kinetic energy produced by the rotation of each rotor into electrical energy.

4. System for the production of electrical energy according to claim 3, **characterised in that** the electrical system of each carriage (12) comprises an alternator, a load transformer, an inverter and one or more operating batteries.

5. System for the production of electrical energy according to any one of claims 2 to 4, **characterised in that** each carriage (12) is provided with a platform framework (14) on which there are mounted said one or more wind turbines (16), between the platform framework (14) and the wheels there being conveniently interposed damping means.

6. System for the production of electrical energy according to claim 1, **characterised in that** said one or more support units (12) are constituted by one or more corresponding closed casings or container, within which there are housed one or more wind turbines (16), said one or more closed casings or container being configured so as to be transported and/or driven by said driving unit.

7. System for the production of electrical energy according to claim 6, **characterised in that** said one or more closed casings or container are provided with one or more lateral and/or top openings, preferably orientable and compatible with the number of the wind turbines (16) present within the closed casing or container, so as to convey the airflow towards said wind turbines (16).

8. System for the production of electrical energy according to any one of claims 1 a 7, **characterised in that** each rotor has a vertical rotation axis and comprises a plurality of blades (20) also with substantially vertical development.

9. System for the production of electrical energy according to claim 8, **characterised in that** the blades (20) are positioned at a predefined distance from the rotation shaft thereof through the interposition of relative substantially horizontal arms (22).

10. System for the production of electrical energy according to claim 9, **characterised in that** the arms (22) are foldable so as to compact the blades (20) around the rotation shaft thereof in a closed configuration of the wind turbine (16).

11. System for the production of electrical energy according to any one of claims 1 to 7, **characterised in that** it comprises a plurality of wind turbines (16) arranged in series, wherein each of said wind turbines (16) is provided with a horizontal rotation axis, as well as a double rotor with a plurality of blades (20) with substantially radial development.

12. System for the production of electrical energy according to any one of the preceding claims, **characterised in that** the support and guide infrastructure (10) is constituted by a track of the railway type with variable length and shape depending on the type of ground on which said track is installed.

13. System for the production of electrical energy according to claim 12, **characterised in that** the driving unit is equipped with a driving means of the internal combustion type and it is configured to move at a predefined constant speed.

14. System for the production of electrical energy according to any one of claims 2 a 5, **characterised in that** it comprises a number of carriages (12) comprised between ten and twenty units, wherein each wind turbine (16) is of the type capable of supplying an electrical power comprised between 2 kW and 10 kW, with an optimal average of 5 kW, and wherein the optimal speed of the carriages (12), driven by the respective driving unit, is comprised between about 30 km/h and about 60 km/h, so as to obtain an air current which moves at about 8 m/s and beyond.
